# EUROPÄISCHE PATENTSCHRIFT

(11) **EP 1 586 415 B1**
(45) Veröffentlichungstag und Bekanntmachung des Hinweises auf die Patenterteilung: **05.09.2007**
(21) Anmeldenummer: 05006244.7
(22) Anmeldetag: 22.03.2005
(51) Int. Cl.: B23Q 39/04, B23B 13/04

(54) **Vorschubeinrichtung für Stangenmaterial in Beschickungseinrichtungen von Mehrspindeldrehmaschinen**
Feeding device for bars in loaders for multiple-spindle lathes
Dispositif d'avance pour barres dans les chargeurs pour tours multi-broche

(30) Priorität: 24.03.2004 IT MI20040570
(43) Veröffentlichungstag der Anmeldung: 19.10.2005
(73) Patentinhaber: SACO S.p.A., 26012 Castelleone (Cremona) (IT)
(72) Erfinder: Perrone, Vito, 26013 Crema (IT)
(74) Vertreter: Mayer, Hans Benno

(56) Entgegenhaltungen:
- US-A- 3 955 687
- US-A- 4 292 864

## Beschreibung

Die vorstehende Erfindung betrifft eine Vorschubeinrichtung für Stangenmaterial in Beschickungseinrichtungen von Mehrspindeldrehmaschinen, wie z. B. von der Firma Pietro Cucchi S.p.A. bekannt.

Mehrspindeldrehmaschinen weisen einen Kopf auf, der in Umfangsrichtung eine Mehrzahl von sich drehenden Spindeln aufnimmt, welche das zu bearbeitende Stangenmaterial an verschiedene Bearbeitungseinrichtungen der Mehrspindeldrehmaschinen zuführen.

Die verschiedenen Materialstangen müssen gesteuert in Richtung der einzelnen Spindeln vorgeschoben werden, um somit eine Bearbeitung der Werkstücke in unterschiedlichen Bearbeitungsstationen zu ermöglichen, in denen unter Einsatz verschiedener Werkzeugeinheiten eine spanabhebende Bearbeitung am Werkstück erfolgt.

Aus dem Stand der Technik ist es bekannt geworden, jede einzelne Vorschubeinrichtung einer Beschickungseinrichtung mit einer mechanischen Fördereinrichtung, die auf das Stangenmaterial einwirkt, auszurüsten. Jede Beschickungseinrichtung ist zu diesem Zwecke mit einem eigenen Motor wirkverbunden, um somit dem Stangenmaterial eine axial ausgerichtete Vorschubbewegung aufzuprägen.

Berücksichtigt man, dass die gesamte Vorschubeinrichtung, welche das Stangenmaterial aufnimmt gesteuert um eine horizontale Achse verdreht wird, so ist es naheliegend, dass die Vorsehung einer Mehrzahl von Motoren, die z.B. als Elektromotoren oder als hydraulisch arbeitende Motoren ausgebildet sind, einen erheblichen technischen Aufwand für das Unterbringen dieser einzelnen Motoren mit sich bringt. Ferner treten erhebliche technische Schwierigkeiten auf, da jeder einzelne Motor eine eigene Einspeisung der elektrischen Energie oder eines hydraulischen Fluids benötigt, was dazu führt, dass aufwändig sich drehende elektrische Kollektoren oder zahlreiche hydraulische, unter Hochdruck stehende Verteileinrichtungen vorzusehen sind.

Andere bekannte Zuführeinrichtungen der vorgenannten Art weisen rein mechanischen Aufbau auf, was zur Vorsehung zahlreicher Bauteile führt, die regelmäßige Instandhaltungsarbeiten benötigen und zur Steuerung des Bewegungsablaufes Einrichtungen in Form von Kurvenscheiben benötigen, was dazu führt, dass bei Umstellung auf eine andere Fertigung ein aufwendiger Eingriff notwendig wird, um die genannten Kurvenscheiben sowie mechanische Bauteile auszutauschen.

Aufgabe der vorstehenden Erfindung ist es, die Nachteile des Standes der Technik zu vermeiden und die Möglichkeit zu eröffnen, auf zahlreiche Elektromotoren oder hydraulisch angetriebene Motoren der sich drehenden Vorrichtung der Beschickungseinrichtung zu verzichten und ferner die Gerätschaften für das Zuführen von elektrischem Strom oder eines hydraulischen Fluids über Kollektoren oder sich drehende Verteileinrichtungen, auf ein Mindestmaß zu beschränken.

Eine weitere Aufgabe der Erfindung ist darin zu sehen, die Möglichkeit zu schaffen, auf Vorrichtungen mit Kurvenscheiben und aufwendige Bauteile in den Vorschubeinrichtungen zu verzichten.

Die erfindungsgemäßen Aufgaben werden erreicht durch eine Vorschubeinrichtung für Stangenmaterial in Beschickungseinrichtungen einer Mehrspindeldrehmaschine unter Vorsehung eines sich drehenden Gehäuses, welches eine Anzahl von Riemenscheiben zum Betätigen von Vorschubbändern aufnimmt, wobei jede der Riemenscheiben mit einem Arbeitszylinder wirkverbunden ist, der einen Kolben aufnimmt, dessen Kolbenstange mit einer Scheibe verbunden ist, die an ihrer Stirnseite eine Verzahnung aufweist, dass gegenüberliegend zu dieser verzahnten Scheibe im Inneren des Zylinders eine zweite mit einer Stirnverzahnung versehene Scheibe angeordnet ist, welche mit einem konisch ausgebildeten Zahnrad verbunden ist, das mit einem Zahnkranz in Wirkverbindung steht, welcher über eine Drehvorrichtung mit einem Antriebsmotor wirkverbunden ist, wobei der Antriebsmotor ortsfest im Inneren des sich drehenden Gehäuses angeordnet ist, und jeder Arbeitszylinder mit einer Rohrleitung zum Zuführen eines unter Druck stehenden Fluids verbunden ist, und diese Rohrleitung mit einer sich drehenden Energieverteilungseinrichtung wirkverbunden ist, und dass ferner vorgesehen ist, dass sich für jeden Arbeitszylinder von der Energieverteilungseinrichtung Leitungen abzweigen, die mit Elektroventilen wirkverbunden sind, die von einer NC-Einrichtung ansteuerbar sind.

Selbstverständlich können anstelle von Zahnradgetrieben auch andere Einrichtungen zur Übertragung einer Bewegung eingesetzt werden, z.B. Zahnriemen, Zahnräder oder ähnliche Einrichtungen. Mit einer Vorrichtung der beschriebenen Art, durch Betätigen der Kolbenzylindereinheiten in selektierter Weise, wird es ermöglicht, nach Wahl die einzelnen Vorschubbänder, die dem Werkstück zugeordnet sind, zu betätigen, und dies unter Vorsehung eines einzigen Antriebsmotors.

Der Erfindungsgegenstand wird nun anhand eines Ausführungsbeispieles genauer beschrieben und in den Zeichnungen dargestellt.

Es zeigen:
Figur 1 die Vorschubeinrichtung im Schnitt entlang einer horizontale Ebene;

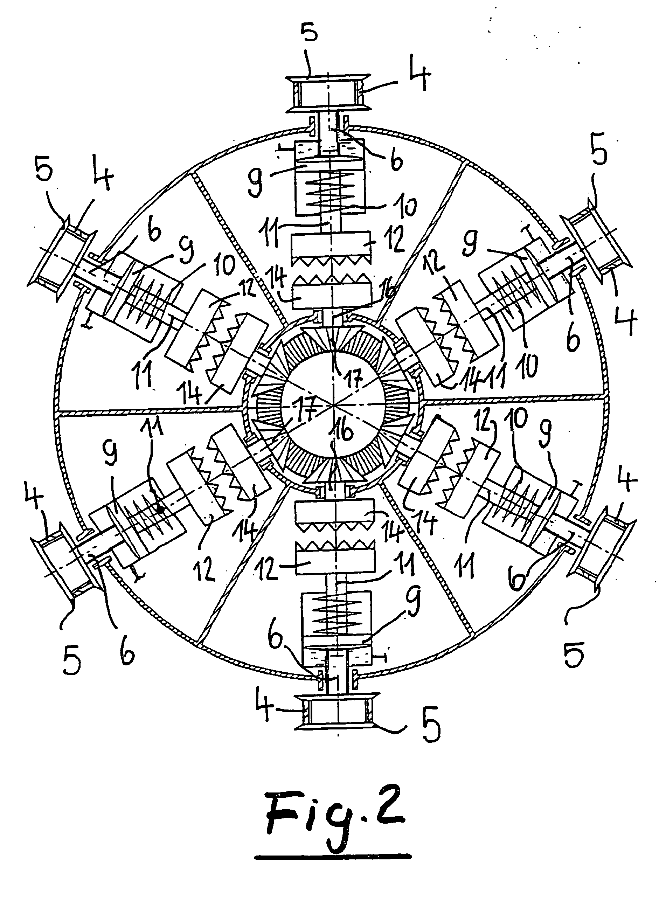

Figur 2 schematisch die Vorschubeinrichtung im Schnitt entlang der Linie II-II der Figur 1; und
Figur 3 schematisch die Vorrichtung gemäß Figur 2 mit einer über ein Band angetriebenen Drehvorrichtung.

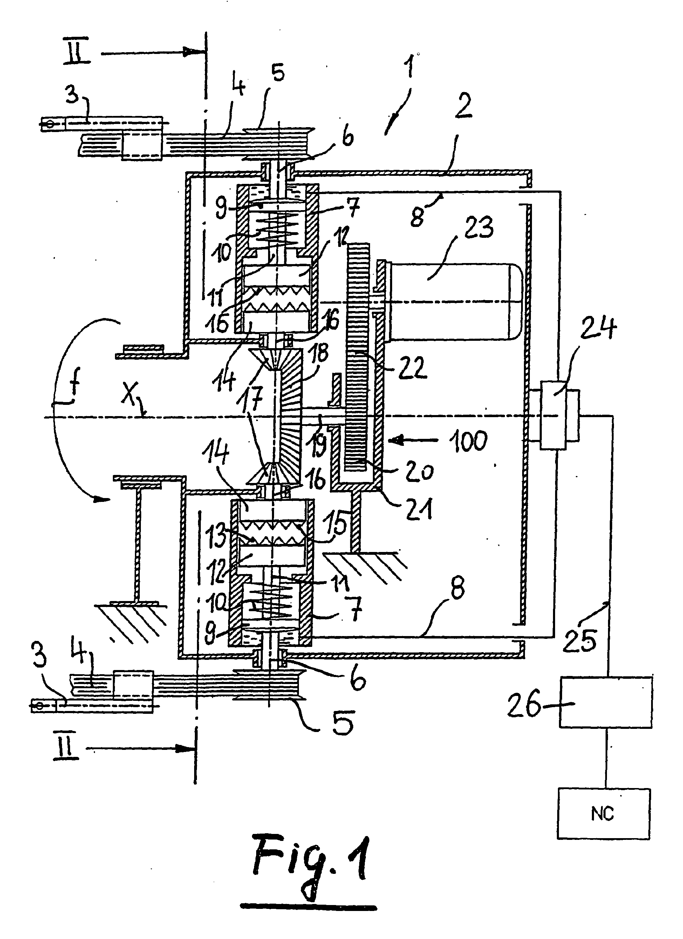

Wie der Figur 1 zu entnehmen ist, besteht die Vorschubeinrichtung, die gesamthaft mit 1 gekennzeichnet ist, aus einem Gehäuse 2, das um eine Achse X in gesteuerter Weise gedreht werden kann, wie dies durch den Pfeil (f) dargestellt ist.

An der Außenseite des Gehäuse 2, entsprechend der Anzahl der vorgesehenen Spindeln der Mehrspindeldrehmaschine, die mit Werkstücken zu beschicken sind, sind Antriebsstangen 3 vorgesehen, die in an sich bekannter Weise mit Zahnriemen 4 wirkverbunden sind, wobei jeder dieser Zahnriemen zum Antrieb einer zugeordneten Antriebsstange 3 dient.

Jeder Zahnriemen wird von einer Riemenscheibe 5 aufgenommen, die auf einer Welle 6 gelagert ist, die drehbar in einer entsprechenden Wand des Gehäuses 2 gelagert ist.

Jede Welle 6 ist mit dem Körper eines zugeordneten einfach wirkenden Zylinders 7 wirkverbunden.

Mittels einer Leitung 8, die nur schematisch dargestellt ist, kann dem Zylinder 7 ein unter Druck stehendes Fluid zugeführt werden.

Im Inneren eines jeden Zylinders 7, der als einfach wirkender Zylinder ausgebildet ist, ist ein Kolben 9 angeordnet, der von einer Rückholfeder 10 beaufschlagt wird, welche an einem Anschlag, der im Inneren des Zylinders 7 vorgesehen ist, anliegt.

Die Stange 11 des Kolbens 9 steht mit einem scheibenförmigen Körper 12 in Verbindung. Dieser scheibenförmige Körper weist an seiner Stirnseite eine Verzahnung 13 auf. Jeder scheibenförmige Körper 12 ist derartig gelagert, dass er eine Axialbewegung ungehindert im Inneren des entsprechenden Zylinders 7 durchführen kann.

Der Zylinder 7 nimmt einen weiteren scheibenförmigen Körper 14 auf, der an seiner Stirnseite eine Verzahnung 15 aufweist, die der Verzahnung 13 des zylinderförmigen Körpers 12 gegenüberliegt.

Somit bilden die scheibenförmigen Körper 12, 14 mit den entsprechenden Verzahnungen 13 , 15 ein Kupplungsstück für die formschlüssige Verbindung zwischen den scheibenförmigen Körpern 12, 13, sobald diese miteinander verbunden sind und dadurch gemeinsam drehen.

Jeder scheibenförmige Körper 14 weist ferner auf seiner, der stirnseitigen Verzahnung 15 gegenüberliegenden Seite, eine Welle 16 auf, die mit einem Kegelzahnrad 17 verbunden ist, das mit einem Zahnkranz 18 kämmt, wobei im Zahnkranz 18 über eine Welle 19 mit einem Drehantrieb 100 wirkverbunden ist, der seinerseits aus einem Zahnrad 20 besteht,das von einem Bügel 21 aufgenommen wird und fest gegenüber dem Gehäuse 2 angeordnet ist.

Das Zahnrad 20 steht mit einem Zahnrad 22 in Wirkverbindung und das Zahnrad 22 ist Bestandteil eines einzigen Antriebsmotores 23. Dieser Motor kann aus einem Elektromotor bestehen oder auch aus einem Motor, der über ein unter Druck stehendes Fluid, z.B. Druckluft angetrieben wird.

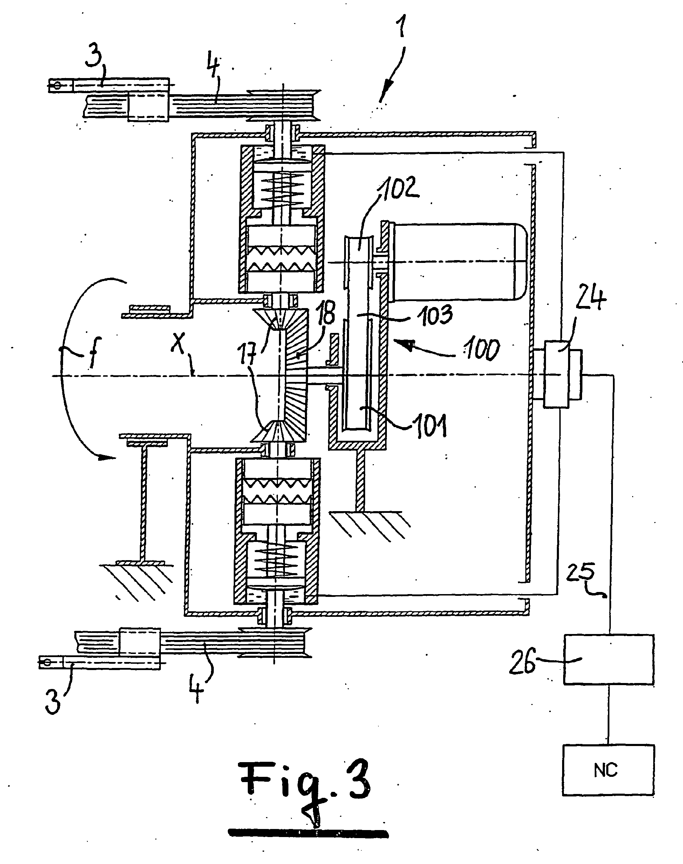

Wie der Figur 3 zu entnehmen ist, besteht alternativ die Möglichkeit den Drehantrieb 100 über zwei Riemenscheiben 101, 102 zu bilden, wobei diese Riemenscheiben untereinander über einen Antriebsriemen 103 wirkverbunden sind.

Die Druckkammern eines jeden Zylinders 7, welche den entsprechenden Kolben 9 aufnehmen, stehen über eine entsprechende Leitung mit einem drehbaren Verteiler 24 in Wirkverbindung, z.B. um in gesteuerter Weise ein unter Druck stehendes Fluid an einen ausgewählten Zylinder 7 zu leiten.

In der Zeichnung nach Figur 1 sind lediglich zwei Zylinder 7 dargestellt, aber es ist naheliegend, dass z.B. im Falle einer Mehrspindeldrehmaschine, die mit sechs Spindeln ausgerüstet ist, auch sechs Antriebszylinder 7 mit sechs Zuleitungen 8 vorzusehen sind, wobei sich diese Zuleitungen bis zum Verteiler 24. erstrecken, der vorgesehen ist, um in selektiver Weise die Zylinder zu betätigen.

Zum Verteiler 24 erstrecken sich einzelne Leitungen 25, entsprechend der Anzahl der mit einem unter Druck stehenden Fluid zu beschickenden Zylinder 7.

Aus Gründen der Einfachheit ist in Figur 1 lediglich eine dieser Leitungen 25 dargestellt. Jede Leitung 25 steht mit einem entsprechenden Elektroventil 26 in Wirkverbindung und jedes Elektroventil 26 steht unter der Kontrolle einer NC-Einheit der Werkzeugmaschine.

Dies bedeutet, dass im Falle von sechs mit zu bearbeitenden Stangen zu beschickenden Spindeln, auch sechs Rohrleitungen 25 vorzusehen sind, um an die entsprechenden ausgewählten Zylinder 7 ein unter Druck stehendes Fluid zu leiten.

Die Arbeitsweise der Vorrichtung gemäß der vorstehenden Erfindung ist folgende:

Von der NC-Einheit der Werkzeugmaschine wird ein Steuersignal an das ausgewählte Elektroventil 26 geleitet, um dadurch die ausgewählte Kolbenzylindereinheit 7 zu betätigen. Über das geöffnete Elektroventil 26 wird ein unter Druck stehendes Fluid, z:B. Druckluft an den Verteiler 24 geleitet und von diesem erreicht das unter Druck stehende Fluid über eine Leitung 8 den selektierten Zylinder 7, wodurch der Kolben 9 gegen die Wirkung der Ruckholfeder 10 betätigt wird, wodurch ein Verbinden der Verzahnung 13 des scheibenförmigen Körpers der mit der Stange 11 des Kolbens 9 verbunden ist, mit der Verzahnung 15 des scheibenförmigen Körpers 14 erfolgt.

Somit wird die Bewegurig des Motors 23, der ständig dreht, über die Verzahnungen 20 und 22 (oder über die Riemenscheiben 101, 102), den konisch ausgebildeten Zahnkranz 18 und das Kegelrad 17 an die Welle 6 der ausgewählten Riemenscheibe 5 übertragen.

## Patentansprüche

1. Vorschubeinrichtung (1) für Stangenmaterial in Beschickungseinrichtungen einer Mehrspindeldrehmaschine, unter Vorsehung eines sich drehenden Gehäuses (2), welches eine Anzahl von Riemenscheiben (5) zum Betätigen von Vorschubbändern (4) aufnimmt, **dadurch gekennzeichnet, dass** jede der Riemenscheiben mit einem Arbeitszylinder (7) wirkverbunden ist, der einen Kolben (9) aufnimmt, dessen Kolbenstange (11) mit einer Scheibe (12) verbunden ist, die an ihrer Stirnseite eine Verzahnung aufweist, dass gegenüberliegend zu dieser verzahnten Scheibe (12) im Inneren des Zylinders (7) eine zweite mit einer Stirnverzahnung versehene Scheibe (14) angeordnet ist, welche mit einem konisch ausgebildeten Zahnrad (17) verbunden ist, das mit einem Zahnkranz (18) in Wirkverbindung steht, der über eine Drehvorrichtung (20, 22; 101, 102) mit einem Antriebsmotor wirkverbunden ist, wobei der Antriebsmotor (23) ortsfest im Inneren des sich drehenden Gehäuses (2) angeordnet ist, und jeder Arbeitszylinder (7) mit einer Rohrleitung (8) zum Zuführen eines unter Druck stehenden Fluids verbunden ist, und diese Rohrleitung (8) mit einer sich drehenden Energieverteilungseinrichtung (24) wirkverbunden ist, und dass vorgesehen ist, dass für jeden vorhandenen Arbeitszylinder (7) von der Energieverteilungseinrichtung (24) Leitungen abzweigen, die mit Elektroventilen (26) wirkverbunden sind, die von einer NC-Einrichtung ansteuerbar sind.

2. Vorschubeinrichtung, nach Patentanspruch 1, **dadurch gekennzeichnet, dass** die Stange (11) des Kolbens (9) fest mit dem scheibenförmigen Körper (12) verbunden ist, und dieser Körper (12) stirnseitig eine Verzahnung (13) aufweist und jeder scheibenförmige Körper (12) derartig gelagert ist, dass er sich frei im Inneren des entsprechenden Zylinders (7) bewegen kann, wobei die scheibenförmigen Körper (12, 13), wenn sie miteinander in Wirkverbindung stehen, gemeinsam drehen.

3. Vorschubeinrichtung, nach Patentanspruch 1, **dadurch gekennzeichnet, dass** der scheibenförmige Körper (12), sowie der scheibenförmige Körper (14) mit den entsprechenden Verzahnungen (13, 15) eine Kupplung über Formschluss bilden.

4. Vorschubeinrichtung, nach Patentanspruch 1, **dadurch gekennzeichnet, dass** jeder scheibenförmige Körper (14) auf der der Verzahnung (15) gegenüberliegenden Seite eine Welle (16) aufweist, die mit einem Kegelzahnrad (17) verbunden ist und das Kegelzahnrad (17) mit einem konisch ausgebildeten Zahnkranz (18) in Wirkverbindung steht, wobei der Zahnkranz über eine Welle (19) mit einem Zahnrad (20) in Wirkverbindung steht, welches von einem Bügel (21) aufgenommen wird, der ortsfest im Inneren des Gehäuses (2) angeordnet ist.

5. Vorschubeinrichtung, nach Patentanspruch 1, **dadurch gekennzeichnet, dass** das Zahnrad (22) mit einem einzigen Antriebsmotor (23) wirkverbunden ist und mit einem Zahnrad (20) in Wirkverbindung steht, der mit der Welle (19) des Kegelzahnrades (18) in Wirkverbindung steht.

6. Vorschubeinrichtung, nach Patentanspruch 1, **dadurch gekennzeichnet, dass** die Dreheinrichtung (100) aus Riemenscheiben (101, 102) besteht, die untereinander über ein Antriebsriemen (103) wirkverbunden sind.

7. Vorschubeinrichtung, nach Patentanspruch 1, **dadurch gekennzeichnet, dass** der Arbeitszylinder (7) von einem einfach wirkenden pneumatischen Zylinder gebildet ist.

8. Vorschubeinrichtung, nach Patentanspruch 1, **dadurch gekennzeichnet, dass** der Arbeitszylinder (7) aus einer elektromagnetischen Antriebseinrichtung besteht.

## Claims

1. Feed device (1) for bar material in feeding devices of a multi-spindle turning machine, with the provision of a rotating housing (2) which receives a number of pulleys (5) for actuating feed belts (4), **characterized in that** each of the pulleys is actively connected to a working cylinder (7) which receives a piston (9) whose piston rod (11) is connected to a disc (12) which has a toothing on its end face, **in that** a second disc (14) provided with an end toothing is arranged inside the cylinder (7), which disc is connected to a conically shaped gear wheel (17) which is actively connected to a gear rim (18) which is actively connected by a rotary device (20, 22; 101, 102) to a drive motor, wherein the drive motor (23) is arranged fixedly inside the rotating housing (2), and wherein each working cylinder (7) is connected to a pipe (8) for supplying a fluid under pressure and this pipe (8) is actively connected to a rotating energy distribution device (24), and **in that** provision is made for pipes to branch off from the energy distribution device (26) for each working cylinder (7) present, which pipes are actively connected to electric valves (26) which can be actuated by an NC device.

2. Feed device according to Claim 1, **characterized in that** the rod (11) of the piston (9) is fixedly connected to the disc-shaped body (12), and this body (12) has on the end face a toothing (13) and each disc-shaped body (12) is mounted so that it is able to move freely inside the corresponding cylinder (7), wherein the disc-shaped bodies (12, 13) rotate together when they are actively connected to each other.

3. Feed device according to Claim 1, **characterized in that** the disc-shaped body (12) and the disc-shaped body (14) form with the corresponding toothings (13, 15) a positive coupling.

4. Feed device according to Claim 1, **characterized in that** each disc-shaped body (14) has a shaft (16) on the side opposite the toothing (15), which shaft is connected to a bevel gear wheel (17) and the bevel gear wheel (17) is actively connected to a conically shaped gear rim (18), wherein the gear rim is actively connected by means of a shaft (19) to a gear wheel (20) which is received by a strap (21) which is arranged fixedly inside the housing (2).

5. Feed device according to Claim 1, **characterized in that** the gear wheel (22) is actively connected to a single drive motor (23) and is actively connected to a gear wheel (20) which is actively connected to the shaft (19) of the bevel gear wheel (18).

6. Feed device according to Claim 1, **characterized in that** the rotary device (100) consists of pulleys (101, 102) which are actively connected to each other by means of a drive belt (103).

7. Feed device according to Claim 1, **characterized in that** the working cylinder (7) is formed by a single acting pneumatic cylinder.

8. Feed device according to Claim 1, **characterized in that** the working cylinder (7) consists of an electromagnetic drive device.

## Revendications

1. Dispositif d'avance (1) pour matériau en barre dans des systèmes d'alimentation d'un tour à broches multiples, prévoyant une enceinte en rotation (2) recevant un certain nombre de poulies (5) pour l'actionnement de bandes d'avance (4), **caractérisé en ce que** chacune des poulies est en liaison fonctionnelle avec un cylindre opérationnel (7) recevant un piston (9) dont la tige de piston (11) est reliée à un disque (12) qui comporte sur sa face frontale une denture, **en ce qu'**en face de ce disque denté (12), à l'intérieur du cylindre (7), est disposé un deuxième disque (14) pourvu d'une denture frontale et relié à une roue dentée (17) de forme conique qui est en liaison fonctionnelle avec une couronne dentée (18) qui est en liaison fonctionnelle par l'intermédiaire d'un dispositif rotatif (20, 22 ; 101, 102) avec un moteur d'entraînement, le moteur d'entraînement (23) étant disposé à emplacement fixe à l'intérieur de l'enceinte en rotation (2) et chaque cylindre opérationnel (7) étant relié à une conduite tubulaire (8) servant à acheminer un fluide sous pression et cette conduite tubulaire (8) étant en liaison fonctionnelle avec un système répartiteur d'énergie en rotation (24), et **en ce qu'**il est prévu que, pour chaque cylindre opérationnel (7) présent, bifurquent du système répartiteur d'énergie (24) des conduites qui sont en liaison fonctionnelle avec des électrovannes (26) pouvant être contrôlées par un système NC.

2. Dispositif d'avance selon la revendication 1, **caractérisé en ce que** la tige (11) du piston (9) est reliée fixement au corps en forme de disque (12) et **en ce que** ce corps (12) comporte du côté frontal une denture (13) et que chaque corps en forme de disque (12) s'appuie de manière à pouvoir bouger librement à l'intérieur du cylindre correspondant (7), les corps en forme de disque (12, 13) tournant ensemble lorsqu'ils sont en liaison fonctionnelle mutuelle.

3. Dispositif d'avance selon la revendication 1, **caractérisé en ce que** le corps en forme de disque (12) de même que le corps en forme de disque (14) établissent par les dentures correspondantes (13, 15) un couplage par correspondance géométrique.

4. Dispositif d'avance selon la revendication 1, **caractérisé en ce que** chaque corps en forme de disque (14) comporte sur le côté faisant face à la denture (15) un arbre (16) qui est relié à une roue dentée conique (17) et que la roue dentée conique (17) est en liaison fonctionnelle avec une couronne dentée (18) de forme conique, la couronne dentée étant en liaison fonctionnelle par un arbre (19) avec une roue dentée (20) qui est supportée par une bride (21) qui est disposée à emplacement fixe à l'intérieur de l'enceinte (2).

5. Dispositif d'avance selon la revendication 1, **caractérisé en ce que** la roue dentée (22) est en liaison fonctionnelle avec un moteur d'entraînement unique (23) et en liaison fonctionnelle avec une roue dentée (20) qui est en liaison fonctionnelle avec l'arbre (19) de la roue dentée conique (18).

6. Dispositif d'avance selon la revendication 1, **caractérisé en ce que** le dispositif rotatif (100) est composé de poulies (101, 102) qui sont en liaison fonctionnelle mutuelle par l'intermédiaire d'une courroie motrice (103).

7. Dispositif d'avance selon la revendication 1, **caractérisé en ce que** le cylindre opérationnel, (7) est constitué d'un cylindre pneumatique à action simple.

8. Dispositif d'avance selon la revendication 1, **caractérisé en ce que** le cylindre opérationnel (7) est constitué d'un dispositif d'entraînement électromagnétique.
